# EUROPÄISCHE PATENTSCHRIFT

(11) **EP 2 792 001 B1**
(45) Veröffentlichungstag und Bekanntmachung des Hinweises auf die Patenterteilung: **19.07.2017**
(21) Anmeldenummer: 12779030.1
(22) Anmeldetag: 22.10.2012
(51) Int. Cl.: H01M 4/04, H01M 4/38, H01M 4/48, H01M 4/58, H01M 4/66, H01M 4/76, H01M 10/052, H01M 4/136, H01M 4/1397, H01M 4/62, H01M 4/36, H01M 4/02

(54) **LITHIUM-SCHWEFEL-ZELLEN-KATHODE MIT SCHICHTSYSTEM**
LITHIUM-SULPHUR CELL CATHODE WITH A LAYER SYSTEM
CATHODE À CELLULES LITHIUM-SOUFRE PRÉSENTANT UN SYSTÈME À COUCHES

(30) Priorität: 14.12.2011 DE 102011088528
(43) Veröffentlichungstag der Anmeldung: 22.10.2014
(73) Patentinhaber: Robert Bosch GmbH, 70442 Stuttgart (DE)
(72) Erfinder: HASENKOX, Ulrich, 71254 Ditzingen (DE); SORHAGE, Constanze, 10193 Stuttgart (DE)
(86) Internationale Anmeldenummer: PCT/EP2012/070865
(87) Internationale Veröffentlichungsnummer: WO 2013/087270

(56) Entgegenhaltungen:
- WO-A1-2006/010894
- DE-A1-102010 001 632
- DE-A1-102010 027 950
- JP-A- 2005 011 660
- LI S; XIE M; LIU J; WANG H; YAN H: "Layer structured sulfur/expanded graphite composite as cathode for lithium battery", ELECTROCHEMICAL AND SOLID-STATE LETTERS, Bd. 14, Nr. 7, 22. April 2011 (2011-04-22) , Seiten A105-A107, XP002690362, DOI: doi:10.1149/1.3582793

## Beschreibung

Die vorliegende Erfindung betrifft eine Kathode für eine Lithium-Schwefel-Zelle, ein Herstellungsverfahren, Lithium-Schwefel-Zellen sowie mobile oder stationäre Systeme, wie Fahrzeuge oder Energiespeicheranlagen.

### Stand der Technik

Lithium-Schwefel-Batterien (Li-S-Batterien) bieten gegenüber herkömmlichen Lithium-Ionen-Zellen den Vorteil einer deutlich höheren Energiedichte. Das Lithium Schwefel-System liefert, bezogen auf das elektrochemisch aktive Material, eine theoretische Energiedichte von 2600 Wh/kg, was ein Mehrfaches der mit konventioneller Lithium-Ionen-Technologie erreichbaren Energiedichte von ca. 580 Wh/kg darstellt.

Eine Lithium-Schwefel-Batterie umfasst herkömmlicherweise eine Kathode, welche einen Stromableiter, beispielsweise eine Metallfolie, und eine, auf dem Stromableiter aufgebrachte Beschichtung umfasst, wobei die Beschichtung eine Mischung aus Schwefel, einem elektrisch leitenden Additiv, meistens Ruß, und einem Binder umfasst.

Die Druckschrift US 2002/0192557 beschreibt ein Verfahren zur Herstellung von Kathoden für Lithium-Schwefel-Zellen, in dem Schwefel, ein elektrisch leitendes Additive, insbesondere Leitruß, und ein Binder zu einer homogenen, viskosen Mischung gemahlen werden und mit der viskosen Mischung anschließend eine Aluminiumfolie beschichtet wird.

Die Druckschrift DE 10 2010 001 632 beschreibt eine aus dem Stand der Technik bekannte Lithium-Schwefel-Zelle.

### Offenbarung der Erfindung

Der Gegenstand der vorliegenden Erfindung ist durch die in den unabhängigen Ansprüchen aufgeführten Merkmale definiert, und ist somit auf eine Kathode für eine Lithium-Schwefel-Zelle, welche einen Stromableiter umfasst, gerichtet. Auf dem Stromableiter ist ein, insbesondere mehrschichtiges, Kathodenschichtsystem aufgebracht, welches mindestens eine Leitschicht und mindestens eine schwefelhaltige Schicht umfasst. Die Leitschicht/en kontaktiert beziehungsweise kontaktieren den Stromableiter elektrisch.

Dabei kann unter einer Leitschicht insbesondere eine Schicht verstanden werden, welche mindestens ein elektrisch leitendes Material umfasst beziehungsweise zumindest im Wesentlichen daraus ausgebildet ist.

Dabei kann unter einer elektrischen Kontaktierung des Stromableiters durch eine Leitschicht sowohl eine direkte Kontaktierung zwischen der jeweiligen Leitschicht und dem Stromableiter als auch eine indirekte Kontaktierung über eine oder mehrere weitere Leitschichten und elektrisch leitende Schichtabschnitte verstanden werden, welche zwischen der jeweiligen Leitschicht und dem Stromableiter angeordnet sind und einander sowie die jeweilige Leitschicht und den Stromableiter elektrisch kontaktieren.

Durch Aufbringen mehrerer Schichten unterschiedlicher Zusammensetzung als Kathodenschicht und den dabei resultierenden mehrschichtigen Aufbau der Kathodenschicht, können eine Reihe von unterschiedlichen Funktionen in die Kathode eingebracht werden.

Durch die Leitschicht/en kann dabei gewährleistet werden, dass die Wege, welche zwischen dem Schwefel und dem Stromableiter zurückgelegt werden müssen kürzer als bei einer zufälligen Verteilung von Schwefelteilchen und elektrisch leitenden Teilchen sein können, insbesondere da beispielsweise bei zufällig verteilt angeordneten, elektrisch leitenden Teilchen nicht zwangsläufig eine elektrische Kontaktierung der Teilchen untereinander und zusätzlich mit dem Stromableiter vorliegen muss und falls doch in der Regel die Strecke, welche der Strom zwischen dem Stromableiter und dem elektrochemisch aktiven Material Schwefel zurücklegen muss in der Regel länger als bei gezielt eingebrachten Leitungsstrukturen ist. So kann vorteilhafterweise der Innenwiderstand gesenkt werden.

Durch große Kontaktoberflächen zwischen dem elektrochemisch aktiven Material Schwefel und der elektrisch leitenden Matrix können zudem hohe Stromraten erzielt werden.

Zusätzlich kann durch einen mehrschichtigen Aufbau die Zyklenbeständigkeit beziehungsweise Zyklenstabilität, das heißt die über zahlreiche Lade- und Entladezyklen betrachtete, verfügbare Kapazität, verbessert werden, welche bei Lithium-Schwefel-Zellen mit herkömmlichen Kathoden meist unzureichend ist und derzeit eine technische Verbreitung von herkömmlichen Lithium-Schwefel-Zellen behindert. Die verbesserte Zyklenbeständigkeit sowie eine bessere Schwefelausnutzung kann durch den mehrschichtigen Aufbau insbesondere dadurch erzielt werden, dass ein Verlust von Schwefel, beispielsweise als unlösliches Li₂S₂ und Li₂S, welches beim Entladen der Zelle gebildet werden kann und bei herkömmlichen Kathoden beim Wiederaufladen der Zelle nicht mehr elektrochemisch kontaktiert wird, oder durch Diffusion von löslichen Polysulfiden, welche bei herkömmlichen Kathoden an Stellen diffundieren können, an denen kein elektrischer Kontakt mehr vorhanden ist, durch den schichtartigen Aufbau verhindert werden kann.

Zudem können die Leitschicht/en und die schwefelhaltige/n Schicht/en auf die jeweilige Funktion optimiert werden. Beispielsweise kann, da die mechanische Stabilität und Haftung an dem Stromableiter durch die Leitschicht/en sichergestellt werden kann, bei der oder den schwefelhaltigen Schichten auf einen Binder verzichtet und so die Gesamtenergiedichte erhöht werden. Da die Leitschicht/en gezielt und funktionsoptimiert ausgebildet werden können, ist es möglich deren Material zu minimieren und somit insgesamt das Materialverhältnis zwischen elektrochemisch aktivem Schwefel und elektrisch leitendem Material zu verbessern.

Durch die gezielt für diesen Zweck ausgebildeten Leitschicht/en kann zudem vorteilhafterweise ein Unterbrechen von elektrisch leitenden Pfade und damit ein Verlust von elektrisch nicht mehr kontaktierten Kathodenbereichen, welche bei herkömmlichen Kathoden von Lithium-Schwefel-Zellen im Fall von Volumenänderungen, insbesondere während des Zyklierens, auftreten können, weitestgehend vermieden werden.

Zudem kann die mechanische Stabilität und die elektrische Leitfähigkeit der Kathode durch die Leitschicht/en erhöht werden, was es ermöglicht, den Stromableiter dünner auszugestalten und so die Gesamtenergiedichte zu erhöhen sowie das Gewichtsverhältnis von Stromableiter und Kathodenbeschichtung zu verbessern.

Im Rahmen einer Ausführungsform umfasst das Kathodenschichtsystem mindestens zwei Leitschichten und mindestens zwei schwefelhaltige Schichten. Insbesondere können dabei die Leitschichten und schwefelhaltigen Schichten alternierend ausgebildet sein.

Im Rahmen einer weiteren Ausführungsform ist auf dem Stromableiter eine Leitschicht des Kathodenschichtsystems aufgebracht. Dies ermöglicht es in den schwefelhaltigen Schichten auf einen Binder zu verzichten und damit die Energiedichte der Kathode zu erhöhen. Erfindungsgemäß weisen die schwefelhaltigen Schichten eine Strukturierung auf.

Unter einer Strukturierung kann dabei insbesondere eine gezielt ausgebildete räumliche Ausgestaltung von unterschiedlichen Schichtabschnitten verstanden werden. Eine, beispielsweise in einer Mischung, zufällig entstehende räumliche Anordnung wird dabei insbesondere nicht als eine Strukturierung verstanden.

Durch eine gezielte Strukturierung können vorteilhafterweise funktionsoptimierte Bereiche erzeugt werden, welche beispielsweise zur Bereitstellung von Elektrolyten oder Additiven oder zur Aufnahme von Reaktionsprodukten dienen können. Insgesamt bietet eine gezielte Strukturierung die Möglichkeit, höhere Energiedichten zu erzielen sowie die Zyklenbeständigkeit der Zellen zu erhöhen. Erfindungsgemäß umfasst eine strukturierte, schwefelhaltige Schicht eine Vielzahl von schwefelhaltigen Schichtabschnitten und mindestens einen elektrisch leitenden Schichtabschnitt, wobei die schwefelhaltigen Schichtabschnitte jeweils zumindest teilweise von dem mindestens einen elektrisch leitenden Schichtabschnitt umgeben sind. Dadurch können die schwefelhaltigen Schichtabschnitte vorteilhafterweise voneinander räumlich getrennt und gleichzeitig jeweils elektrisch kontaktiert werden.

Durch eine Verkleinerung der Dimensionen der Bereiche, in denen der elektrochemisch aktive Schwefel vorhanden ist, können die Wege zwischen elektrisch leitender Matrix und dem elektrisch isolierenden Schwefel verkürzt und der Schwefel besser ausgenutzt werden. Kurze Wege sorgen zudem wie bereits erläutert für geringe Innenwiderstände, wobei hohe Oberflächen der Kontakte zwischen Schwefel und elektrisch leitender Matrix hohe Stromraten ermöglichen.

Im Rahmen einer speziellen Ausgestaltung sind die schwefelhaltigen Schichtabschnitte einer beziehungsweise der strukturierten, schwefelhaltigen Schicht/en in Form eines sich wiederholenden Musters ausgebildet und/oder der mindestens eine elektrisch leitende Schichtabschnitt einer beziehungsweise der strukturierten, schwefelhaltigen Schicht/en netzförmig ausgebildet.

Im Rahmen einer weiteren speziellen Ausgestaltung ist der mindestens eine elektrisch leitende Schichtabschnitt einer strukturierten, schwefelhaltigen Schicht wabenartig ausgebildet, wobei die schwefelhaltigen Schichtabschnitte der strukturierten, schwefelhaltigen Schicht jeweils in den Wabeninnenräumen ausgebildet sind.

Unter wabenartige kann dabei nicht nur eine von Bienenwaben bekannte, im Wesentlichen auf Sechsecken basierende Wabenstruktur verstanden werden, sondern es können darunter auch Wabenstrukturen verstanden werden, welche im Wesentlichen auf einer oder mehreren, symmetrischen oder unsymmetrischen, anderen polygonen Formen, wie Dreiecken, Vierecken, Fünfecken, Siebenecken, Achtecken, etc., oder einer Kombination davon mit Sechsecken basieren.

Im Rahmen einer weiteren Ausführungsform ist mindestens eine strukturierte, schwefelhaltige Schicht zwischen zwei Leitschichten angeordnet. Insbesondere können dabei die beiden Leitschichten die schwefelhaltigen Schichtabschnitte der strukturierten schwefelhaltigen Schicht abdecken beziehungsweise verschließen. Insbesondere können dabei die schwefelhaltigen Schichtabschnitte von den Leitschichten und den elektrisch leitenden Schichtabschnitten der strukturierten, schwefelhaltigen Schicht eingeschlossen werden. Dabei ist es sowohl möglich, dass die schwefelhaltigen Schichtabschnitte von den Leitschichten und den elektrisch leitenden Schichtabschnitten vollständig eingeschlossen werden als auch, dass die Leitschichten und elektrisch leitenden Schichtabschnitte gezielt darin eingebrachte Poren beziehungsweise Aussparungen aufweisen, welche gezielt Ionentransportkanäle ausbilden.

Durch das Einschließen des elektrochemischen Schwefels in entsprechenden Strukturen kann eine Wegdiffusion der im Elektrolyten löslichen Polysulfide vermieden werden. Der Schwefel kann dadurch auch als Polysulfid in der Nähe der elektrisch leitenden Matrix gehalten und beim Aufladen der Zelle wieder oxidiert werden, wodurch der Schwefel in den folgenden Entladevorgänge wieder zur Verfügung steht. Durch das Einbringen von gezielten Ionentransportkanälen kann erreicht werden, dass die bei der Entladung zum Ladungsausgleich benötigten Lithiumionen in die schwefelhaltigen Strukturen hinein diffundieren können, die gebildeteten löslichen Produkte aber nicht aus den schwefelhaltigen Strukturen hinaus diffundieren können.

Im Rahmen einer weiteren Ausführungsform ist beziehungsweise sind die Leitschicht/en und/oder der beziehungsweise die elektrisch leitenden Schichtabschnitt/e der strukturierten, schwefelhaltigen Schicht/en aus einem porösen Material ausgebildet. So können vorteilhafterweise gezielt Ionentransportkanäle realisiert werden.

Im Rahmen einer anderen alternativen oder zusätzlichen Ausführungsform weist beziehungsweise weisen die Leitschicht/en und/oder der beziehungsweise die elektrisch leitenden Schichtabschnitt/e der strukturierten, schwefelhaltigen Schicht/en, gezielt eingebrachte Aussparungen auf. So können vorteilhafterweise gezielt Ionentransportkanäle realisiert werden.

Im Rahmen einer weiteren Ausführungsform umfasst beziehungsweise umfassen die Leitschicht/en und/oder der beziehungsweise die elektrisch leitenden Schichtabschnitt/e der strukturierten, schwefelhaltigen Schicht/en ein metallisches Material, beispielsweise Aluminium. Insbesondere können die Leitschichten und/oder die elektrisch leitenden Schichtabschnitte daraus ausgebildet sein. Metallische Materialien weisen einen geringeren spezifischen elektrischen Widerstand als Leitruß auf, so dass dadurch vorteilhafterweise der Innenwiderstand verringert und die Stromrate erhöht werden kann.

Im Rahmen einer anderen alternativen oder zusätzlichen Ausführungsform umfasst beziehungsweise umfassen die Leitschicht/en und/oder der beziehungsweise die elektrisch leitenden Schichtabschnitt/e der strukturierten, schwefelhaltigen Schicht/en ein Lithiumionen leitendes und elektrisch leitendes Material, beispielsweise einen anorganischen Lithiumionenleiter oder einen Polymerelektrolyten. Insbesondere können die Leitschichten und/oder die elektrisch leitenden Schichtabschnitte daraus ausgebildet sein. Durch ein Lithiumionen leitendes und elektrisch leitendes Material kann vorteilhafterweise auch der Ionentransport und dadurch wiederum die Stromrate weiter verbessert werden.

Im Rahmen einer weiteren Ausführungsform ist beziehungsweise sind die Leitschicht/en aus einem porösen Material ausgebildet. Insbesondere können in dem porösen Material Poren netzwerkartige Kanäle ausbilden. Dies bietet eine Möglichkeit gezielt Ionentransportkanäle einzubringen.

Im Rahmen einer anderen alternativen oder zusätzlichen Ausführungsform weist beziehungsweise weisen die Leitschicht/en gezielt eingebrachte Aussparungen auf. Dies bietet eine andere Möglichkeit gezielt Ionentransportkanäle einzubringen.

Die schwefelhaltige/n Schicht/en kann beziehungsweise können jeweils beispielsweise eine Schichtdicke vorn ≤ 200 µm aufweisen. Durch eine geringe Schichtdicke der Bereiche, in denen der elektrochemisch aktive Schwefel vorhanden ist können vorteilhafterweise die Wege zwischen elektrisch leitender Matrix und elektrisch isolierendem Schwefel verkürzt werden, so dass der Schwefel möglichst vollständig ausgenutzt werden kann. Kurze Wege sorgen wie bereits erläutert für geringe Innenwiderstände, wobei hohe Oberflächen der Kontakte zwischen Schwefel und elektrisch leitender Matrix hohe Stromraten ermöglichen.

Die Leitschicht/en kann beziehungsweise können jeweils beispielsweise eine Schichtdicke vorn ≤ 200 µm aufweisen. Zur Erzielung hoher Energiedichten wird dabei ein möglichst niedriger Wert, beispielsweise von ≤ 20 µm, besonders vorteilhaft ≤ 5 µm bevorzugt.

Insbesondere können die Leitschicht/en eine geringere Schichtdicke als die schwefelhaltige/n Schicht/en aufweisen. Beispielsweise kann die Schichtdicke der Leitschicht/en ≤ 50 %, beispielsweise ≤ 10%, der Schichtdicke der schwefelhaltigen Schicht/en betragen.

Der Stromableiter kann beispielsweise eine Aluminiumfolie sein. Der Stromableiter kann beispielsweise eine Schichtdicke von ≤ 50 µm aufweisen. Zur Erzielung besonders hoher Energiedichten wird ein möglichst niedriger Wert, beispielsweise von ≤ 20 µm, bevorzugt.

Insbesondere können die Leitschicht/en eine geringere Schichtdicke als die Dicke des Stromableiters aufweisen. Beispielsweise kann die Schichtdicke der Leitschicht/en ≤ 50 %, beispielsweise ≤ 10%, der Dicke des Stromableiters betragen.

So kann beispielsweise auf eine Leitschicht von beispielsweise 2 µm Schichtdicke eine schwefelhaltige Schicht mit einer Schichtdicke von 50 µm aufgebracht werden und insbesondere dieser Vorgang mehrere Male wiederholt werden. Dabei ermöglicht es das Schichtsystem insgesamt mehr elektrochemisch nutzbaren Schwefel bereitzustellen als eine herkömmliche Lithium-Schwefel-Zellen-Schwefelschicht deren Schichtdicke und damit Schwefelgehalt, insbesondere aus Gründen der elektrischen Kontaktierbarkeit des Schwefels, begrenzt ist. Insgesamt kann so vorteilhafterweise die Masse an elektrochemisch nutzbarem Schwefel, insbesondere bezüglich der des Stromableiters erhöht werden. Auf diese Weise kann wiederum die Gesamtenergiedichte gesteigert werden. Zudem kann, da das Schichtsystem zur mechanischen Stabilität beiträgt, der Stromableiter dünner ausgestaltet werden und damit die Gesamtenergiedichte weiter gesteigert werden.

Hinsichtlich weiterer Merkmale und Vorteile der erfindungsgemäßen Kathode wird hiermit explizit auf die Erläuterungen im Zusammenhang mit dem später erläuterten, erfindungsgemäßen Verfahren, der später erläuterten, erfindungsgemäßen Lithium-Schwefel-Zelle, dem später erläuterten, erfindungsgemäßen mobilen oder stationären System sowie auf die Figur und Figurbeschreibung verwiesen.

Ein weiterer Gegenstand der vorliegenden Erfindung ist das in Anspruch 9 definierte Verfahren zur Herstellung einer Kathode für eine Lithium-Schwefel-Zelle, insbesondere zur Herstellung einer erfindungsgemäßen Kathode, welches die Verfahrensschritte:
a) Bereitstellen einer Stromableiterfolie,
b) Aufbringen einer Leitschicht auf die Stromableiterfolie, und
c) Aufbringen einer schwefelhaltigen Schicht auf die Leitschicht,
umfasst.

Im Rahmen einer Ausführungsform umfasst das Verfahren weiterhin den Verfahrensschritt d): Aufbringen einer weiteren Leitschicht auf die schwefelhaltige Schicht.

Im Rahmen einer weiteren Ausführungsform umfasst das Verfahren weiterhin den Verfahrensschritt e): Aufbringen einer weiteren schwefelhaltigen Schicht auf die weitere Leitschicht.

Insbesondere ist es möglich die Verfahrensschritte d) und e) mehrfach alternierend zu wiederholen (d', e', d", e", ..). Erfindungsgemäß wird in Verfahrensschritt c) und/oder e) eine strukturierte, schwefelhaltige Schicht aufgebracht. Die strukturierte, schwefelhaltige Schicht umfasst dabei eine Vielzahl von schwefelhaltigen Schichtabschnitten und mindestens einen elektrisch leitenden Schichtabschnitt. Dabei sind die schwefelhaltigen Schichtabschnitte jeweils von dem mindestens einen elektrisch leitenden Schichtabschnitt zumindest im Wesentlichen umgeben und insbesondere dadurch voneinander zumindest im Wesentlichen räumlich getrennt sein.

Dabei kann unter zumindest im Wesentlichen verstanden werden, dass gezielte Ionenkanäle vorgesehen werden können.

In Verfahrensschritt c) und/oder e) kann insbesondere die strukturierte, schwefelhaltige Schicht derart aufgebracht werden, dass zunächst mindestens ein netzwerkartig ausgebildeter, elektrisch leitender Schichtabschnitt aufgebracht wird, wobei die Zwischenräume des netzwerkartig ausgebildeten, elektrisch leitenden Schichtabschnitts dann mit schwefelhaltigem Material gefüllt werden.

Die Leitschichten, welche - beispielsweise in Verfahrensschritt b) und d) oder d) und d'), vor und nach dem Aufbringen der strukturierten, schwefelhaltigen Schicht aufgebracht werden, können insbesondere derart ausgebildet werden, dass elektrisch leitende Schichtabschnitte der Leitschichten zusammen mit dem mindestens einen elektrisch leitenden Schichtabschnitt der strukturierten, schwefelhaltigen Schicht die schwefelhaltigen Schichtabschnitte zumindest im Wesentlichen oder sogar vollständig einschließen.

Im Rahmen einer weiteren Ausführungsform erfolgt das Aufbringen der Leitschicht/en und schwefelhaltigen Schicht/en mittels Drucken, Rakeln und/oder Sprühen.

Hinsichtlich weiterer Merkmale und Vorteile des erfindungsgemäßen Verfahrens wird hiermit explizit auf die Erläuterungen im Zusammenhang mit der erfindungsgemäßen Kathode, der später erläuterten, erfindungsgemäßen Lithium-Schwefel-Zelle, dem später erläuterten, erfindungsgemäßen mobilen oder stationären System sowie auf die Figur und Figurbeschreibung verwiesen.

Ein weiterer Gegenstand der vorliegenden Erfindung ist eine Lithium-Schwefel-Zelle, welche eine erfindungsgemäße Kathode oder eine erfindungsgemäß hergestellte Kathode umfasst.

Die Anode der Lithium-Schwefel-Zelle kann insbesondere metallisches Lithium umfassen. Beispielsweise kann die Anode einen Stromableiter, zum Beispiel aus Kupfer, und eine darauf aufgebrachte Lithiumfolie umfassen.

Weiterhin kann die Lithium-Schwefel-Zelle einen Elektrolyten umfassen, welcher den Transport von Lithium-Ionen ermöglicht.

Darüber hinaus kann die Lithium-Schwefelzelle einen Separator umfassen, welcher den Anoden- und Kathodenraum voneinander trennt und nur den Transport von Lithiumionen ermöglicht.

Hinsichtlich weiterer Merkmale und Vorteile der erfindungsgemäßen Lithium-Schwefel-Zelle wird hiermit explizit auf die Erläuterungen im Zusammenhang mit der erfindungsgemäßen Kathode, dem erfindungsgemäßen Verfahren dem später erläuterten, erfindungsgemäßen mobilen oder stationären System sowie auf die Figur und Figurbeschreibung verwiesen.

Ein weiterer Gegenstand der vorliegenden Erfindung ist ein mobiles oder stationäres System, welches mindestens eine erfindungsgemäße Lithium-Schwefel-Zelle umfasst. Insbesondere kann es sich dabei um ein Fahrzeug, beispielsweise ein Hybrid-, Plug-in-Hybrid- oder Elektrofahrzeug, eine Energiespeicheranlage, beispielsweise zur stationären Energiespeicherung, zum Beispiel in einem Haus oder einer technischen Anlagen, ein Elektrowerkzeug, ein Elektrogartengerät oder ein elektronisches Gerät, zum Beispiel ein Notebook, ein PDA oder ein Mobiltelefon handeln.

Hinsichtlich weiterer Merkmale und Vorteile des erfindungsgemäßen mobilen oder stationären Systems wird hiermit explizit auf die Erläuterungen im Zusammenhang mit der erfindungsgemäßen Kathode, dem erfindungsgemäßen Verfahren, der erfindungsgemäßen Lithium-Schwefel-Zelle sowie auf die Figur und Figurbeschreibung verwiesen.

### Zeichnungen und Beispiele

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: einen schematischen Querschnitt durch eine erste Ausführungsform einer nicht erfindungsgemäßen Kathode;
- Fig. 2: einen schematischen Querschnitt durch eine zweite Ausführungsform nicht erfindungsgemäßen Kathode;
- Fig. 3a-5: schematische Querschnitte und Draufsichten zur Veranschaulichung einer Ausführungsform eines erfindungsgemäßen Verfahrens zur Herstellung einer dritten Ausführungsform einer erfindungsgemäßen Kathode; und
- Fig. 6: einen schematischen Querschnitt durch eine vierte Ausführungsform einer erfindungsgemäßen Kathode.

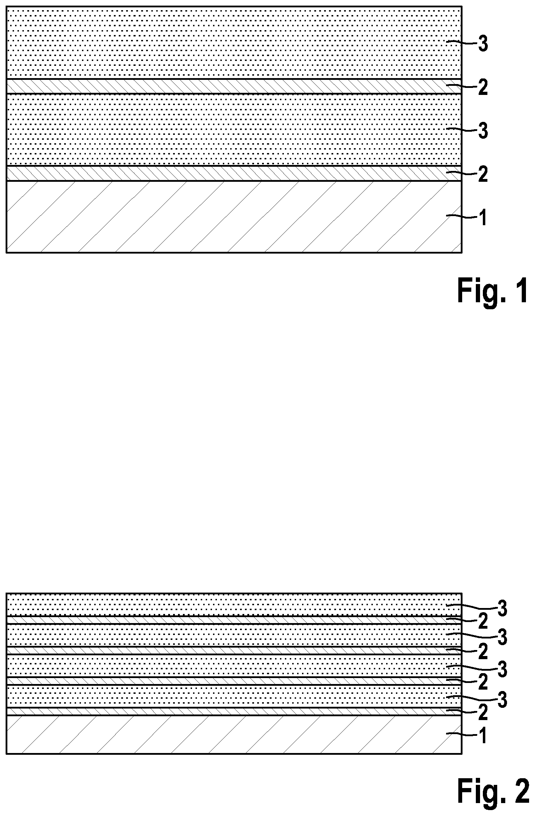

Figur 1 zeigt, dass die Kathode im Rahmen dieser Ausführungsform einen Stromableiter 1 aufweist, auf welchen eine Leitschicht 2 aufgebracht ist, auf der Leitschicht 2 ist eine schwefelhaltige Schicht 3 aufgebracht. Auf der schwefelhaltigen Schicht 3 ist wiederum eine weitere Leitschicht 2 aufgebracht, auf der wiederum eine weitere schwefelhaltige Schicht 3 aufgebracht ist.

Die Leitschichten 2 kontaktieren dabei einander sowie den Stromableiter 1 elektrisch (nicht dargestellt). Die elektrische Kontaktierung der Leitschichten 2 untereinander sowie mit dem Stromableiter 1 kann dabei beispielsweise am Rand des Schichtsystems erfolgen. Es ist jedoch ebenso möglich in den schwefelhaltigen Schichten 3 elektrisch leitende Abschnitte vorzusehen, welche die benachbarten Leitschichten 2 elektrisch leitend miteinander verbinden.

Die Leitschichten 2 und schwefelhaltigen Schichten 3 unterscheiden sich dabei in ihrer Zusammensetzung. Die Leitschichten 2 sind zumindest im Wesentlichen aus einem elektrisch leitenden Material, beispielsweise Aluminium oder, insbesondere gebundenem, Aluminium-Pulver, ausgebildet. Die schwefelhaltigen Schichten 3 sind im Wesentlichen aus einem schwefelhaltigen Material ausgebildet.

Durch Aufbringen dünner Leitschichten 2 können vorteilhafterweise mehrere dünne Schwefelschichten 3 aufgebracht werden, ohne dass der Gewichtsanteil des elektrisch leitenden Materials im Verhältnis zum aktiven Schwefelmaterial zu stark ansteigt.

Durch die dünnen elektrisch leitenden Zwischenschichten (Leitschichten) 2 kann vorteilhafterweise die Ratenfähigkeit gesteigert werden. Zudem kann aufgrund der Leitschichten 2 die Dicke des Stromableiters 1 sowie gegebenenfalls die Anzahl an Stromableitern reduziert werden. Dies kann vorteilhafterweise zu einem Anstieg der Energiedichte und einer Verringerung des Gewicht führen.

Zudem ermöglicht ein derartiger mehrschichtiger Aufbau Bereiche zu erzeugen, in welchen das Aktivmaterial in hoher Konzentration vorliegt und an einer Wegdiffusion gehindert wird. Weiterhin ermöglicht ein mehrschichtiger Aufbau unterschiedlicher Zusammensetzung, dass in den Bereichen, welche das Aktivmaterial enthalten, auch Zusammensetzungen eingesetzt werden können, welche eine hohe Schwefelausnutzung und hohe Kapazität aufweisen, jedoch als alleiniges Beschichtungsmaterial ungeeignet wären, beispielsweise wegen einer geringen Leitfähigkeit oder schlechten Hafteigenschaften.

Die in Figur 2 gezeigte Ausführungsform unterscheidet sich im Wesentlichen dadurch von der in Figur 1 gezeigten Ausführungsform, dass das Kathodenschichtsystem anstelle von jeweils zwei Leitschichten 2 und schwefelhaltigen Schichten 3 alternierender Anordnung, nun jeweils vier Leitschichten 2 und schwefelhaltige Schichten 3 in einer alternierenden Anordnung aufweist.

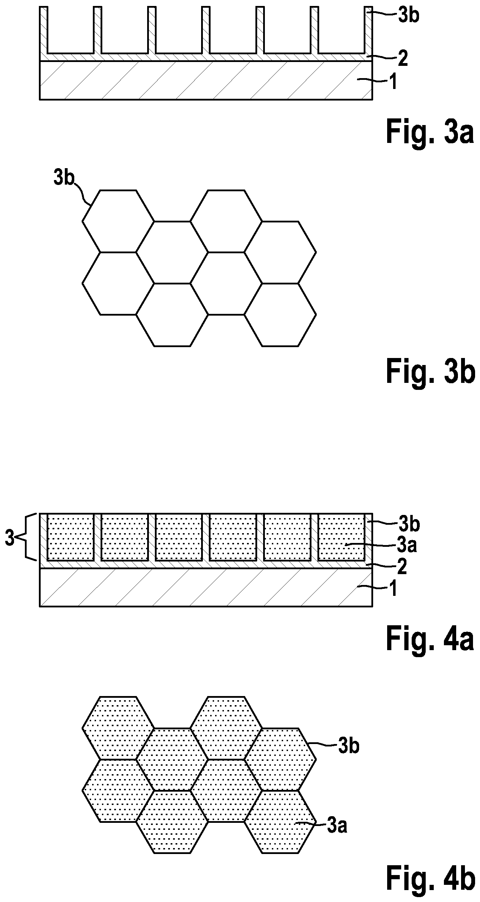

Die Figuren 3a bis 5 beschreiben ein Verfahren zur Herstellung einer weiteren Ausführungsform einer erfindungsgemäßen Kathode, welche strukturierte, schwefelhaltige Schichten 3 umfasst.

Figur 3a ist eine Querschnittsansicht und veranschaulicht, dass auf einen Stromableiter 1 zunächst eine Leitschicht 2 aufgebracht wurde. Auf die Leitschicht 2 wurde wiederum ein netzwerkartig ausgebildeter, elektrisch leitender Schichtabschnitt 3b aufgebracht.

Figur 3b ist eine Draufsicht auf die in Figur 3a gezeigte Anordnung und veranschaulicht, dass der netzwerkartig ausgebildete, elektrisch leitende Schichtabschnitt 3b wabenartig ausgebildet wurde.

Figur 4a ist wiederum eine Querschnittsansicht und veranschaulicht, dass die Zwischenräume des netzwerkartig ausgebildeten, elektrisch leitenden Schichtabschnitts 3b mit schwefelhaltigem Material gefüllt wurden.

Figur 4b ist eine Draufsicht auf die in Figur 4a gezeigte Anordnung und veranschaulicht, dass dadurch eine Vielzahl von schwefelhaltigen Schichtabschnitten 3a in Form eines sich wiederholenden Musters ausgebildet wurden, insbesondere wobei die schwefelhaltigen Schichtabschnitte 3a jeweils in den Wabeninnenräumen ausgebildet wurden.

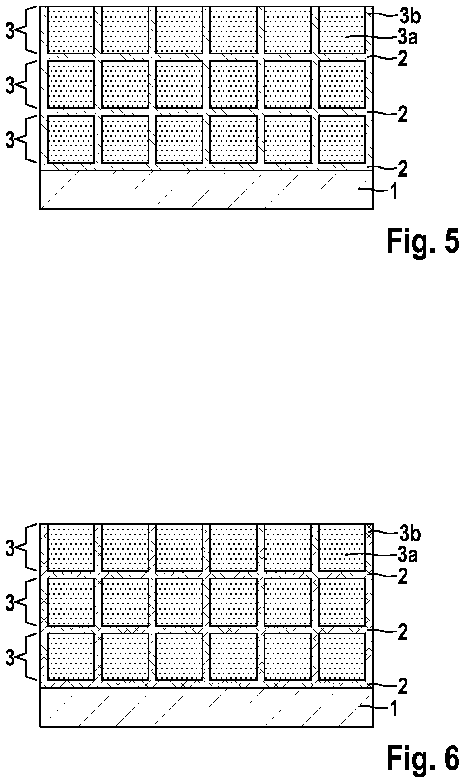

Figur 5 veranschaulicht, dass durch wiederholtes Auftragen von weiteren Leitschichten 2 und derartig strukturierten, schwefelhaltigen Schichten 3,3a,3b ein komplexes Kathodenschichtsystem erzeugt werden kann, in dem die Leitschichten 2 zusammen mit den elektrisch leitenden Schichtabschnitten 3b die schwefelhaltigen Schichtabschnitte 3a im Wesentlichen einschließen.

Figur 6 zeigt eine weitere Ausführungsform, welche sich von der in Figur 5 gezeigten Ausführungsform im Wesentlichen dadurch unterscheidet, dass die Leitschichten 2 und elektrisch leitenden Schichtabschnitten 3b der schwefelhaltigen Schichten 3 aus einem porösen Material ausgebildet sind. Auf diese Weise können gezielt Transportkanäle erzeugt werden, durch die Ionen, gegebenenfalls zusammen mit Elektrolyt, diffundieren können, was sich vorteilhaft auf die Ratenfähigkeit auswirken kann. Dies ist besonders bei hohen Schichtdicken vorteilhaft, um immer ausreichende Elektrolytmengen zur Verfügung zu haben, welches sich vorteilhaft auf hohe Stromraten auswirkt.

Die Porosität kann auch durch lokales Weglassen von elektrisch leitendem Material erzeugt werden, beispielsweise durch den Einsatz von Masken oder durch ein Versetzen von, beispielsweise in Fig. 4a gezeigten Schichten, so dass makroskopische Hohlstrukturen (Löcher, Kanäle) entstehen.

## Patentansprüche

1. Kathode für eine Lithium-Schwefel-Zelle, umfassend
- einen Stromableiter (1) und
- ein auf dem Stromableiter (1) aufgebrachtes Kathodenschichtsystem (2,3), wobei das Kathodenschichtsystem (2,3),
- mindestens eine Leitschicht (2) und
- mindestens eine sich von der Leitschicht (2) unterscheidende schwefelhaltige Schicht (3)
umfasst, wobei die mindestens eine Leitschicht (2) den Stromableiter (1) elektrisch kontaktiert, wobei die mindestens eine schwefelhaltige Schicht (3) eine Strukturierung aufweist, **dadurch gekennzeichnet, dass** jeweils eine schwefelhaltige Schicht (3) eine Vielzahl von schwefelhaltigen Schichtabschnitten (3a) und mindestens einen elektrisch leitenden Schichtabschnitt (3b) umfasst, und wobei die schwefelhaltigen Schichtabschnitte (3a) jeweils von dem mindestens einen elektrisch leitenden Schichtabschnitt (3b) umgeben sind.

2. Kathode nach Anspruch 1, wobei das Kathodenschichtsystem (2,3) mindestens zwei Leitschichten (2) und mindestens zwei schwefelhaltige Schichten (3) umfasst, insbesondere wobei die Leitschichten (2) und schwefelhaltigen Schichten (3) alternierend ausgebildet sind.

3. Kathode nach Anspruch 1 oder 2, wobei auf dem Stromableiter (1) eine Leitschicht (2) des Kathodenschichtsystems (2,3) aufgebracht ist.

4. Kathode nach einem der Ansprüche 1-3,
wobei die schwefelhaltigen Schichtabschnitte (3a) einer strukturierten, schwefelhaltigen Schicht (3) in Form eines sich wiederholenden Musters ausgebildet sind, und/oder
wobei der mindestens eine elektrisch leitende Schichtabschnitt (3b) einer strukturierten, schwefelhaltigen Schicht (3) netzförmig ausgebildet ist.

5. Kathode nach einem der Ansprüche 1-4, wobei der mindestens eine elektrisch leitende Schichtabschnitt (3b) einer strukturierten, schwefelhaltigen Schicht (3) wabenartig ausgebildet ist, wobei die schwefelhaltigen Schichtabschnitte (3a) der strukturierten, schwefelhaltigen Schicht (3) jeweils in den Wabeninnenräumen ausgebildet sind.

6. Kathode nach einem der Ansprüche 1 bis 5, wobei mindestens eine strukturierte, schwefelhaltige Schicht (3) zwischen zwei Leitschichten (2) angeordnet ist, insbesondere wobei die beiden Leitschichten (2) die schwefelhaltigen Schichtabschnitte (3a) abdecken, insbesondere wobei die schwefelhaltigen Schichtabschnitte (3a) von den Leitschichten (2) und den elektrisch leitenden Schichtabschnitten (3b) eingeschlossen werden.

7. Kathode nach einem der Ansprüche 1 bis 6, wobei die Leitschichten (2) und/oder die elektrisch leitenden Schichtabschnitte (3b) der strukturierten, schwefelhaltigen Schichten (3) aus einem porösen Material ausgebildet sind oder wobei die Leitschichten (2) und/oder die elektrisch leitenden Schichtabschnitte (3b) der strukturierten, schwefelhaltigen Schichten (3) gezielt eingebrachte Aussparungen aufweisen.

8. Kathode nach einem der Ansprüche 1 bis 7, wobei die Leitschichten (2) und/oder die elektrisch leitenden Schichtabschnitte (3b) der strukturierten, schwefelhaltigen Schichten (3) ein metallisches Material, beispielsweise Aluminium, und/oder ein Lithiumionen leitendes und elektrisch leitendes Material, beispielsweise einen anorganischen Lithiumionenleiter oder einen Polymerelektrolyten, umfassen.

9. Verfahren zur Herstellung einer Kathode für eine Lithium-Schwefel-Zelle, umfassend die Verfahrensschritte:
a) Bereitstellen einer Stromableiterfolie (1),
b) Aufbringen einer Leitschicht (2) auf die Stromableiterfolie (1), und
c) Aufbringen einer schwefelhaltigen Schicht (3) auf die Leitschicht (2),
wobei in Verfahrensschritt c) eine strukturierte, schwefelhaltige Schicht (3) aufgebracht wird, welche eine Vielzahl von schwefelhaltigen Schichtabschnitten (3a) und mindestens einen elektrisch leitenden Schichtabschnitt (3b) umfasst, wobei die schwefelhaltigen Schichtabschnitte (3a) jeweils von dem mindestens einen elektrisch leitenden Schichtabschnitt (3b) zumindest im Wesentlichen umgeben sind,
insbesondere wobei in Verfahrensschritt c) eine strukturierte, schwefelhaltige Schicht (3) derart aufgebracht wird, dass zunächst mindestens ein netzwerkartig ausgebildeter, elektrisch leitender Schichtabschnitt (3b) aufgebracht wird, wobei die Zwischenräume des netzwerkartig ausgebildeten, elektrisch leitenden Schichtabschnitts (3b) dann mit schwefelhaltigem Material gefüllt werden,
insbesondere wobei die Leitschichten (2), welche vor und nach dem Aufbringen der strukturierten, schwefelhaltigen Schicht (3) aufgebracht werden, derart ausgebildet werden, dass elektrisch leitende Schichtabschnitte der Leitschichten (2) zusammen mit dem mindestens einen elektrisch leitend Schichtabschnitt (3b) der strukturierten, schwefelhaltigen Schicht (3) die schwefelhaltigen Schichtabschnitte (3a) zumindest im Wesentlichen einschließen.

10. Verfahren nach Anspruch 9, wobei das Verfahren weiterhin den Verfahrensschritt d): Aufbringen einer weiteren Leitschicht (2) auf die schwefelhaltige Schicht (3), und vorzugsweise weiterhin den Verfahrensschritt e): Aufbringen einer weiteren schwefelhaltigen Schicht (3) auf die weitere Leitschicht (2), umfasst.

11. Verfahren nach Anspruch 10, wobei das Aufbringen der Leitschicht (2) und schwefelhaltigen Schicht (3) mittels Drucken, Rakeln und/oder Sprühen erfolgt.

12. Lithium-Schwefel-Zelle, umfassend eine Kathode nach einem der Ansprüche 1 bis 8 oder eine Kathode hergestellt durch ein Verfahren nach einem der Ansprüche 9 bis 11.

13. Mobiles oder stationäres System, insbesondere Fahrzeug oder Energiespeicheranlage, umfassend mindestens eine Lithium-Schwefel-Zelle nach Anspruch 12.

## Claims

1. Cathode for a lithium-sulfur cell, comprising
- a current collector (1) and
- a cathode layer system (2, 3) applied to the current collector (1),
wherein the cathode layer system (2, 3) comprises
- at least one conductive layer (2) and
- at least one sulfur-containing layer (3) which differs from the conductive layer (2),
wherein the at least one conductive layer (2) makes electrical contact with the current collector (1), wherein the at least one sulfur-containing layer (3) has a structuring, **characterized in that** in each case a sulfur-containing layer (3) comprises a multiplicity of sulfur-containing layer portions (3a) and at least one electrically conductive layer portion (3b), and wherein the sulfur-containing layer portions (3a) are surrounded in each case by the at least one electrically conductive layer portion (3b).

2. Cathode according to Claim 1, wherein the cathode layer system (2, 3) comprises at least two conductive layers (2) and at least two sulfur-containing layers (3), in particular wherein the conductive layers (2) and sulfur-containing layers (3) are formed in alternation.

3. Cathode according to Claim 1 or 2, wherein a conductive layer (2) of the cathode layer system (2, 3) is applied to the current collector (1).

4. Cathode according to one of Claims 1-3, wherein the sulfur-containing layer portions (3a) of a structured, sulfur-containing layer (3) are configured in the form of a repetitive pattern, and/or
wherein the at least one electrically conductive layer portion (3b) of a structured, sulfur-containing layer (3) has a reticular form.

5. Cathode according to one of Claims 1-4, wherein the at least one electrically conductive layer portion (3b) of a structured, sulfur-containing layer (3) has a honeycomb-like form, wherein the sulfur-containing layer portions (3a) of the structured, sulfur-containing layer (3) are formed in each case in the internal spaces of the honeycomb.

6. Cathode according to one of Claims 1 to 5, wherein at least one structured, sulfur-containing layer (3) is arranged between two conductive layers (2), in particular wherein the two conductive layers (2) cover the sulfur-containing layer portions (3a), in particular wherein the sulfur-containing layer portions (3a) are enclosed by the conductive layers (2) and the electrically conductive layer portions (3b).

7. Cathode according to one of Claims 1 to 6, wherein the conductive layers (2) and/or the electrically conductive layer portions (3b) of the structured, sulfur-containing layers (3) are formed from a porous material or wherein the conductive layers (2) and/or the electrically conductive layer portions (3b) of the structured, sulfur-containing layers (3) have recesses which are introduced in a targeted manner.

8. The cathode according to one of Claims 1 to 7, wherein the conductive layers (2) and/or the electrically conductive layer portions (3b) of the structured, sulfur-containing layers (3) comprise a metallic material, for example aluminum, and/or an electrically conductive material which conducts lithium ions, for example an inorganic lithium ion conductor or a polymer electrolyte.

9. Method for producing a cathode for a lithium-sulfur cell, comprising the method steps of:
a) providing a current collector foil (1),
b) applying a conductive layer (2) to the current collector foil (1), and
c) applying a sulfur-containing layer (3) to the conductive layer (2),
wherein method step c) involves the application of a structured, sulfur-containing layer (3) comprising a multiplicity of sulfur-containing layer portions (3a) and at least one electrically conductive layer portion (3b), wherein the sulfur-containing layer portions (3a) are in each case at least substantially surrounded by the at least one electrically conductive layer portion (3b),
in particular wherein method step c) involves the application of a structured, sulfur-containing layer (3) in such a manner that firstly at least one electrically conductive layer portion (3b) of reticular configuration is applied, the interstices of the electrically conductive layer portion (3b) of reticular configuration then being filled with sulfur-containing material,
in particular wherein the conductive layers (2) which are applied before and after the application of the structured, sulfur-containing layer (3) are configured in such a manner that electrically conductive layer portions of the conductive layers (2) together with the at least one electrically conductive layer portion (3b) of the structured, sulfur-containing layer (3) at least substantially enclose the sulfur-containing layer portions (3a).

10. Method according to Claim 9, the method furthermore comprising method step d): applying a further conductive layer (2) to the sulfur-containing layer (3), and preferably furthermore comprising method step e): applying a further sulfur-containing layer (3) to the further conductive layer (2).

11. Method according to Claim 10, wherein the conductive layer (2) and sulfur-containing layer (3) are applied by means of printing, doctor blade application and/or spraying.

12. Lithium-sulfur cell comprising a cathode according to one of Claims 1 to 8 or a cathode produced by a method according to one of Claims 9 to 11.

13. Mobile or stationary system, in particular vehicle or energy storage installation, comprising at least one lithium-sulfur cell according to Claim 12.

## Revendications

1. Cathode pour cellule au lithium-soufre, comprenant
- un collecteur de courant (1) et
- un système de couches cathodiques (2, 3) appliqué sur le collecteur de courant (1), dans lequel le système de couches cathodiques (2, 3) comprend
- au moins une couche conductrice (2) et
- au moins une couche (3) contenant du soufre, qui est différente de la couche conductrice (2),
dans laquelle l'au moins une couche conductrice (2) est en contact électrique avec le collecteur de courant (1), dans laquelle l'au moins une couche contenant du soufre (3) présente une structuration, **caractérisée en ce qu'**une couche contenant du soufre (3) comprend respectivement une pluralité de parties de couche contenant du soufre (3a) et au moins une partie de couche électriquement conductrice (3b), et dans laquelle les parties de couche contenant du soufre (3a) sont respectivement entourées par l'au moins une partie de couche électriquement conductrice (3b).

2. Cathode selon la revendication 1, dans laquelle système de couches cathodiques (2, 3) comprend au moins deux couches conductrices (2) et au moins deux couches contenant du soufre (3), en particulier, dans laquelle les couches conductrices (2) et les couches contenant du soufre (3) sont réalisées en alternance.

3. Cathode selon la revendication 1 ou 2, dans laquelle une couche conductrice (2) du système de couches cathodiques (2, 3) est appliquée sur le collecteur de courant (1).

4. Cathode selon l'une quelconque des revendications 1-3,
dans laquelle les parties de couche contenant du soufre (3a) d'une couche contenant du soufre structurée (3) sont réalisées sous la forme d'un motif répétitif, et/ou
dans laquelle l'au moins une partie de couche électriquement conductrice (3b) d'une couche contenant du soufre structurée (3) est réalisée sous la forme d'un réseau.

5. Cathode selon l'une quelconque des revendications 1-4,
dans laquelle l'au moins une partie de couche électriquement conductrice (3b) d'une couche contenant du soufre structurée (3) est réalisée sous la forme d'un nid d'abeille, dans laquelle les parties de couche contenant du soufre (3a) de la couche contenant du soufre structurée (3) sont respectivement réalisées sous la forme d'espace intérieur du nid d'abeille.

6. Cathode selon l'une quelconque des revendications 1-5,
dans laquelle au moins une couche contenant du soufre structurée (3) est disposée entre deux couches conductrices (2), en particulier, dans laquelle les deux couches conductrices (2) recouvrent les parties de couches contenant du soufre (3a), en particulier, dans laquelle les parties de couche contenant du soufre (3a) sont incluses dans les couches conductrices (2) et les parties de couche électriquement conductrices (3b).

7. Cathode selon l'une quelconque des revendications 1 à 6, dans laquelle les couches conductrices (2) et/ou les parties de couche électriquement conductrices (3b) des couches contenant du soufre structurée (3) sont constituées d'un matériau poreux ou dans laquelle les couches conductrices (2) et/ou les parties de couche électriquement conductrices (3b) des couches contenant du soufre structurées (3) présentent des évidements introduits de manière ciblée.

8. Cathode selon l'une quelconque des revendications 1 à 7, dans laquelle les couches conductrices (2) et/ou les parties de couche électriquement conductrices (3b) des couches contenant du soufre structurées (3) comprennent un matériau métallique, par exemple de l'aluminium et/ou un matériau conducteur d'ions lithium et électriquement conducteur, par exemple un conducteur d'ions lithium inorganique ou un électrolyte polymère.

9. Procédé de fabrication d'une cathode destinée à une cellule au lithium-soufre, comprenant les étapes consistant à :
a) prévoir une feuille conductrice de courant (1),
b) appliquer une couche conductrice (2) sur la feuille collectrice de courant (1), et
c) appliquer une couche contenant du soufre (3) sur la couche conductrice (2),
dans laquelle, lors de l'étape de procédé c), une couche contenant du soufre structurée (3) est appliquée, laquelle couche comprend une pluralité de parties de couche contenant du soufre (3a) et au moins une partie de couche électriquement conductrice (3b), dans lequel les parties de couche contenant du soufre (3a) sont respectivement au moins sensiblement entourées par l'au moins une partie de couche électriquement conductrice (3b),
en particulier, dans lequel, lors de l'étape de procédé c), une couche contenant du soufre structurée (3) est appliquée de manière à ce qu'une partie de couche électriquement conductrice (3b) réalisée sous forme de réseau soit au moins tout d'abord appliquée, dans lequel les espaces intermédiaires de la partie de couche électriquement conductrice (3b) réalisée sous forme de réseau sont ensuite remplis d'un matériau contenant du soufre,
en particulier, dans lequel les couches conductrices (2) qui sont appliquées avant et après l'application de la couche contenant du soufre (3) structurée sont réalisées de manière à ce que des parties de couche électriquement conductrices des couches conductrices (2), en association avec l'au moins une partie de couche électriquement conductrice (3b) de la couche contenant du soufre structurée (3), incluent au moins sensiblement les parties de couches contenant du soufre (3a).

10. Procédé selon la revendication 9, dans lequel le procédé comprend en outre l'étape de procédé d) consistant à : appliquer une autre couche conductrice (2) sur la couche contenant du soufre (3), et comprenant en outre de préférence l'étape de procédé e) consistant à : appliquer une autre couche contenant du soufre (3) sur l'autre couche conductrice (2).

11. Procédé selon la revendication 10, dans lequel l'application de la couche conductrice (2) et de la couche contenant du soufre (3) s'effectue par compression, enduction et/ou pulvérisation.

12. Cellule au lithium-soufre comprenant une cathode selon l'une quelconque des revendications 1 à 8, ou une cathode réalisée par un procédé selon l'une quelconque des revendications 9 à 11.

13. Système mobile ou fixe, notamment véhicule ou installation d'accumulation d'énergie, comprenant au moins une cellule au lithium-soufre selon la revendication 12.
